# EUROPEAN PATENT APPLICATION

(11) **EP 4 769 796 A1**
(43) Date of publication of application: **01.07.2026**
(21) Application number: 24895709.4
(22) Date of filing: 31.07.2024
(51) Int. Cl.: H01M 50/503, H01M 50/528, H01M 50/516, H01M 10/04, H01M 6/00

(54) **BATTERY PIN AND BATTERY**

(30) Priority: 30.11.2023 CN 202323262945 U
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: ZHENG, Xu, Huizhou, Guangdong 516039 (CN); SHU, Kuanjin, Huizhou, Guangdong 516039 (CN); DUAN, Dong, Huizhou, Guangdong 516039 (CN); LIU, Ziwen, Huizhou, Guangdong 516039 (CN); HE, Wei, Huizhou, Guangdong 516039 (CN)
(74) Representative: Studio Torta S.p.A.
(86) International application number: PCT/CN2024/109016
(87) International publication number: WO 2025/112606

(57) **Abstract**

The present application provides a battery pin and a battery. The battery pin includes a top cover connecting portion and a connecting portion. The tab connecting portion includes a main body plate, a connecting plate, and a bending plate. The bending plate is configured to connect with a tab. The top cover connecting portion is bent and connected to an end of the main body plate, the bending plate is bent and connected to a side of the connecting plate, and the main body plate is bendably connected to the other side of the connecting plate.

## Description

The present application claims priority to Chinese Patent Application No. 202323262945.4 filed with the Chinese Patent Office on November 30, 2023, the entire contents of which are incorporated herein by reference.

### TECHNICAL FIELD

The present application relates to the technical field of batteries, and more particularly, to a battery pin and a battery.

### BACKGROUND

In related arts, a pin of a battery top cover is connected to a positive/negative tab of a core by an ultrasonic welding process, so that current flows from inside of a bare core to outside of a battery. Generally, after the pin of the battery top cover and the tab of the core are connected by the ultrasonic welding process, the pin is bent and placed in a housing.

### SUMMARY

In related arts, due to material nature of a pin, a rebound occurs after bending. A certain space is occupied after the pin is bent and rebounded, resulting in a reduced gap between an assembly and a housing and affecting a core to be assembled in the housing.

In a first aspect, the present application provides a battery pin configured to connect a terminal of a top cover and a tab of a core, the battery pin including:
a top cover connecting portion configured to connect with the terminal; and
a tab connecting portion including a main body plate, a connecting plate, and a bending plate, the bending plate being configured to connect with the tab;
where the top cover connecting portion is bent and connected to an end of the main body plate, the bending plate is bendably connected to a side of the connecting plate, and the main body plate is bent and connected to the other side of the connecting plate.

In a second aspect, the present application further provides a battery. The battery includes a battery pin including a top cover connecting portion and a tab connecting portion. The top cover connecting portion is configured to connect with a terminal. The tab connecting portion includes a main body plate, a connecting plate, and a bending plate, where the bending plate is configured to connect with a tab. The top cover connecting portion is bent and connected to an end of the main body plate, the bending plate is bendably connected to a side of the connecting plate, and the main body plate is bent and connected to the other side of the connecting plate.

### BENEFICIAL EFFECT

In technical solutions of the present application, a battery pin is configured to connect a terminal of a top cover and a tab of a core, and the battery pin includes a top cover connecting portion configured to electrically connected to the terminal and a tab connecting portion connected to an end of the top cover connecting portion. Specifically, the tab connecting portion includes a main body plate, a connecting plate, and a bending plate; and the bending plate is bent to a side of the main body plate through the connecting plate. As such, the bending plate does not rebound owe to the function of the connecting plate, and therefore, the bending plate does not occupy extra space, thereby improving space utilization rate of a battery. In addition, as the bending plate does not rebound, it is not needed to press the bending plate during installation. Thus, the installation of the battery pin is more convenient, and the installation efficiency is higher.

### BRIEF DESCRIPTION OF THE DRAWINGS

FIG. 1 is a schematic structural diagram of a battery pin according to some embodiments of the present application;
FIG. 2 is a schematic structural diagram of the battery pin of FIG. 1 in an expanded state;
FIG. 3 is a schematic structural diagram of the battery pin of FIG. 1 in a folded state;
FIG. 4 is a bottom view of FIG. 3;
FIG. 5 is an enlarged schematic view of A in FIG. 4; and
FIG. 6 is a schematic structural diagram of a battery according to some embodiments of the present application.

### Reference Numerals:

100. battery pin; 101. top cover connecting portion; 102, tab connecting portion; 103. main body plate; 104. connecting plate; 105, bending plate; 106, outer side surface; 107, inner side surface; 108, thinning groove; 109. pre-pressed line; 110. first arc segment; 111. linear segment; 112, second arc segment; 113. first groove wall; 114. second groove wall; 115. first segment; 116. first portion; 117. second portion; 118. communication hole; 1000. battery; 200. core; 201. tab; 300. top cover; and 301. terminal.

### DETAILED DESCRIPTION OF THE EMBODIMENTS

In related arts, a pin of a battery top cover is connected to a positive/negative tab of a core by an ultrasonic welding process, so that current flows from inside of a bare core to outside of a battery. Generally, after the pin of the battery top cover and the tab of the core are connected by the ultrasonic welding process, the pin is bent and placed in a housing. However, due to material nature of the pin, a rebound occurs after bending. A certain space is occupied after the pin is bent and rebounded, resulting in a reduced gap between an assembly and the housing and affecting the core to be assembled in the housing.

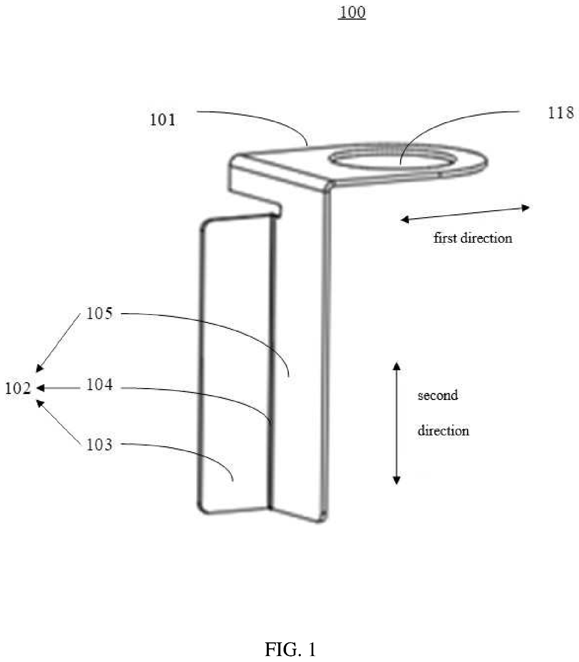

In view of this, the present application provides a battery pin. FIG. 1 to FIG. 5 are schematic structural diagrams of embodiments of the battery pin 100 provided in the present application. The battery pin 100 provided in the present application is simple in structure, in process, and in installation, and prevents the battery pin 100 from rebounding, to improve space utilization rate. The battery pin 100 will be described in detail below with the main drawings.

Referring to FIG. 1, FIG. 2, and FIG. 3, the present application provides a battery pin 100 configured to connect a terminal 301 of a top cover 300 and a tab 201 of a core 200. The battery pin 100 includes a top cover connecting portion 101 and a tab connecting portion 102, the top cover connecting portion 101 is configured to connect to the terminal 301. The tab connecting portion 102 includes a main body plate 103, a connecting plate 104, and a bending plate 105, and the bending plate 105 is configured to connect with the tab 201. The top cover connecting portion 101 is bent and connected to an end of the main body plate 103, the bending plate 105 is bendably connected to a side of the connecting plate 104, and the main body plate 103 is bent and connected to the other side of the connecting plate 104.

In technical solutions of the present application, the battery pin 100 is configured to connect the terminal 301 of the top cover 300 and the tab 201 of the core 200, and the battery pin 100 includes the top cover connecting portion 101 configured to electrically connect with the terminal 301 and the tab connecting portion 102 configured to connect to an end of the top cover connecting portion 101. Specifically, the tab connecting portion 102 includes the main body plate 103, the connecting plate 104, and the bending plate 105, and the bending plate 105 is bent to a side of the main body plate 103 through the connecting plate 104. As such, the bending plate 105 does not rebound as the function of the connecting plate 104. Thus, the bending plate 105 does not occupy extra space, thereby improving the space utilization rate of the battery 1000. Furthermore, since the bending plate 105 does not generate a rebound, it is not needed to press the bending plate 105 during installation, so that the installation of the battery pin 100 is more convenient and the installation efficiency is higher.

Specifically, in the present embodiment, the bending plate 105 is bendably connected to a side of the connecting plate 104 to indicate that the bending plate 105 may be connected with the connecting plate 104 in a same horizontal plane, and may be bent to be opposite to the main body plate 103 (that is, the bending plate 105 and the connecting plate 104 are positioned in two planes). The bending plate 105 is bent and connected to the other side of the connecting plate 104 to indicate that the bending plate 105 is not positioned in a same horizontal plane as the connecting plate 104.

Specifically, in the present embodiment, the main body plate 103 functions as a support, the bending plate 105 functions as a connection. More specifically, in an actual use process, the main body plate 103 is connected to the core 200 of the battery 1000, the main body plate 103 is configured to support the bending plate 105, the bending plate 105 is connected to the tab 301 of the battery 1000, and the bending plate 105 is configured to transfer current.

It should be noted that, in some embodiments, the battery pin 100 includes the top cover connecting portion 101 and the tab connecting portion 102 that are connected. The battery pin 100 may be a sheet metal member, and the battery pin 100 may be a metal aluminum pin, or a metal copper pin, but is not limited thereto, and may be selected according to actual conditions.

The manufacturing method for the battery pin 100 is not limited. Specifically, the battery pin 100 may be manufactured by a process such as punching, stamping, or bending of a metal plate, or may be manufactured by a process such as integral molding or bending. In some embodiments, the battery pin 100 is manufactured using an integrated molding process, which improves material utilization and production efficiency.

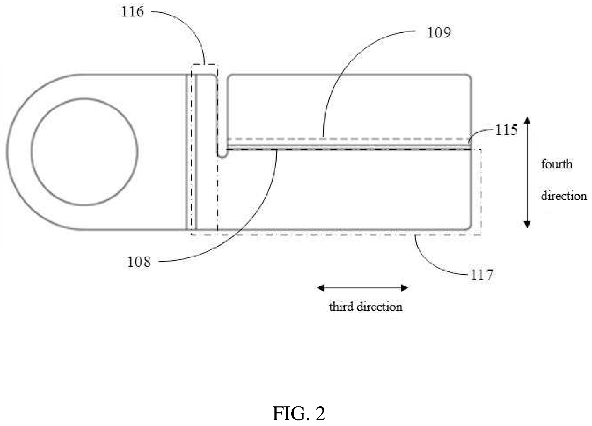

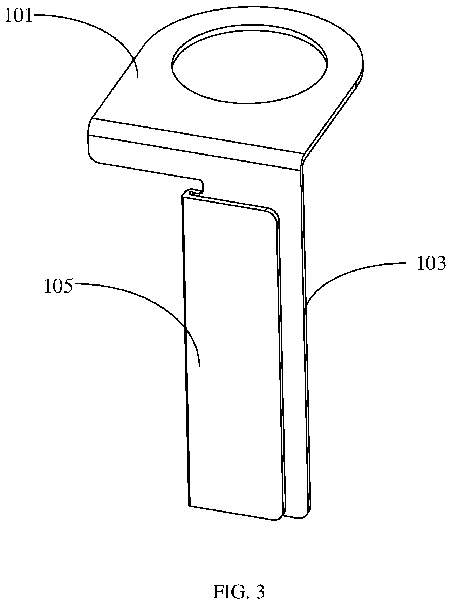

In the present embodiment, the battery pin 100 has an expanded state and a folded state (the expanded state is a state in which the battery pin 100 is manufactured and molded, and the folded state is an actual use state of the battery pin 100). The top cover connecting portion 101 includes a first plate, and the first plate is connected to the terminal 301. Specifically, in the expanded state, referring to FIG. 2, the first plate, the main body plate 103, the connecting plate 104, and the bending plate 105 are in the same horizontal plane; in the folded state, referring to FIG. 3, for example, in a first direction in FIG. 1 where the first direction is perpendicular to a second direction, the first plate extends in the first direction, and the main body plate 103 extends in the second direction (that is, a predetermined angle is included between the main body plate 103 and the first plate). The bending plate 105 moves close to the main body plate 103 until the bending plate 105 is folded above the main body plate 103, in which case the connecting plate 104 is in a folded state (that is, the bending plate 105 is folded above the main body plate 103 by bending the connecting plate 104). It should be noted that the bending plate 105 and the main body plate 103 may be at a predetermined angle, or may be in a parallel state. The main body plate 103 and the bending plate 105 are spaced and in a parallel state in consideration of increasing the space utilization rate.

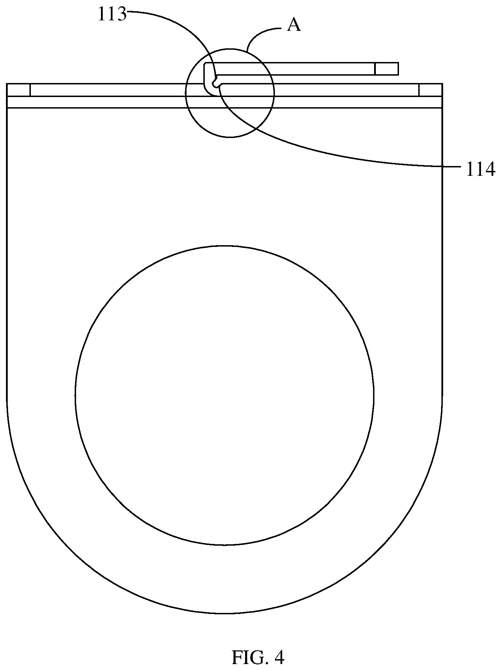

Specifically, in the actual production process, the battery pin 100 is usually manufactured in an integrated manner for ease of production, because the first plate, the main body plate 103, the connecting plate 104, and the bending plate 105 on the manufactured battery pin 100 are in same horizontal plane. In order to facilitate the folding of the bending plate 105 above the main body plate 103, the connecting plate 104 is thinned. As such, the connecting plate 104 is more easily deformed and easily processed during bending process. Specifically, referring to FIG. 3 and FIG. 4, the connecting plate 104 has an outer side surface 106 close to the core 200 and an inner side surface 107 away from the core 200, and a thinning groove 108 is formed on the connecting plate 104. The thinning groove 108 has an opening on the inner side surface 107. It should be noted that the specific position of the thinning groove 108 is not limited, and in an embodiment, the thinning groove 108 is disposed at the junction of the connecting plate 104 and the main body plate 103.

In another embodiment, the thinning groove 108 is disposed at the junction of the connecting plate 104 and the bending plate 105. More specifically, in the actual production process, the main body plate 103 is welded to the core 200 of the battery 1000 first. After the main body plate 103 is fixed, the operator can bend the bending plate 105 to a side of the main body plate 103 by means of a tool. Since the connecting plate 104 is formed with the thinning groove 108, the thickness of the connecting plate 104 at the thinning groove 108 may be less than that at another position, and the connecting plate 104 has a small strength at the thinning groove 108 during the bending process. As such, the connecting plate 104 is preferably deformed at the thinning groove 108. This arrangement intends to have deformation and bending of the connecting plate 104 at a specific position, which makes the operation more convenient. Meanwhile, it is avoided the main body plate 103 from being pulled during the deformation and causing the main body plate 103 to be unsoldered from the core 200 of the battery 1000, as the connecting plate 104 is deformable at the specific position.

It should be noted that, in order to avoid influence of the connecting plate 104 on the bending plate 105 during bending, in the present embodiment, referring to FIG. 2, FIG. 3 and FIG. 4, the main body plate 103, the connecting plate 104 and the bending plate 105 are integrally provided, and the inner side surface 107 of the connecting plate 104 is further provided with a pre-pressed line 109. The specific position of the pre-pressed line 109 is not limited. In an embodiment, if the thinning groove 108 is formed at the junction of the connecting plate 104 and the main body plate 103, the pre-pressed line 109 is formed at the junction of the connecting plate 104 and the bending plate 105. In another embodiment, if the thinning groove 108 is formed at the junction of the connecting plate 104 and the bending plate 105, the pre-pressed line 109 is formed at the junction of the connecting plate 104 and the main body plate 103. It should be noted that, in actual bending process, the connecting plate 104 has two position to be bent, one is the position where the connecting plate 104 is connected with the main body plate 103, and the other is the position where the connecting plate 104 is connected with the bending plate 105. The pre-pressed line 109 is disposed at inner side of the connecting plate 104 and is disposed close to the bending plate 105. During bending the bending plate 105, the connecting plate 104 is bent at the position of the pre-pressed line 109 to make the bending plate 105 parallel with a side of the main body plate 103, thereby completing the whole bending process.

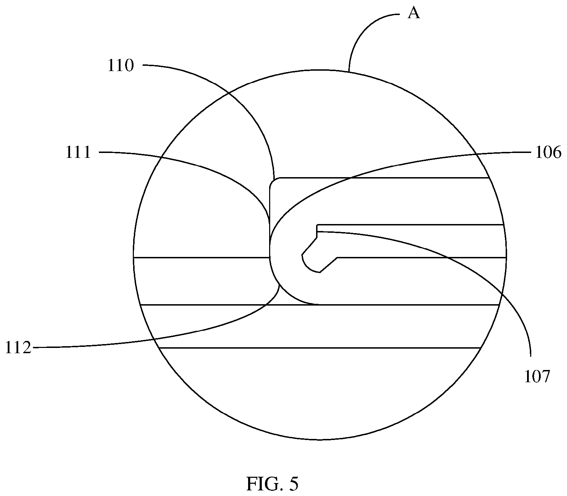

In some embodiments, referring to FIG. 4 and FIG. 5, the outer side surface 106 of the connecting plate 104 includes a first arc segment 110, a linear segment 111, and a second arc segment 112 connected in sequence. The first arc segment 110 is disposed close to the bending plate 105, the second arc segment 112 is disposed close to the body plate 103, and a radius of the first arc segment 110 is less than a radius of the second arc segment 112. Specifically, in the present embodiment, the outer side surface 106 of the connecting plate 104 is formed of one linear segment 111 and two arc segments. The first arc segment 110 is formed by bending along the pre-pressed line 109. The second arc segment 112 is formed by a groove bottom of the thinning groove 108. The thinning groove 108 has a first groove wall 113 close to the bending plate 105 and a second groove wall 114 away from the tab 201. A first segment 115 is defined at a position between the first groove wall 113 and the pre-pressed line 109. The linear segment 111 is formed by the first segment 115. Therefore, the first arc segment 110, the linear segment 111 and the second arc segment 112 of the outer side surface 106 of the connecting plate 104 are formed by the thinning groove 108 together with the pre-pressed line 109. This design can effectively prevent the connecting plate 104 from rebounding after bending, thereby improving the volume utilization rate of the battery 1000.

In some embodiments, with continued reference to FIG. 4 and FIG. 5, in the present embodiment, in order to ensure that the volume utilization of the battery 1000 is increased, orthographic projection of the pre-pressed line 109 on the connecting portion is in a boundary of the linear segment 111; and a distance from the first arc segment 110 to an end of the bending plate 105 away from the main body plate 103 is L1, and a distance from the pre-pressed line 109 to an end of the bending plate 105 away from the main body plate 103 is L2, where L1>L2. With this arrangement, it is possible to effectively avoid the occurrence of rebound of the connecting plate 104 after bending, so that the bending plate 105 and the main body plate 103 can be relatively parallel to improve the volume utilization rate of the battery 1000.

More specifically, in an embodiment, the bottom of the thinning groove 108 is disposed in an arc, and a center of the second arc segment 112 is disposed concentric with a center of the bottom of the thinning groove 108. With this arrangement, it is possible that the second arc segment 112 is formed entirely by the thinning groove 108, so that the connecting plate 104 is deformed and bent at a specific position, and the operator is more convenient to operate. At the same time, the connecting plate 104 can be deformed at a specific position, and it is possible to avoid the main body plate 103 from being pulled during deformation, and from unsoldering from the core 200 of the battery 1000.

In some embodiments, a distance between the first groove wall 113 and a second groove wall 114 is A, a thickness of the connecting plate is C, and a distance between the first groove wall 113 and the pre-pressed line 109 is D, where 0.5C<A<2C, 0<D≤2C. For example, in a particular embodiment, when the thickness C of the connecting plate is 1 mm, the value of the distance D between the first groove wall 113 and the pre-pressed line 109 satisfies with 0<D≤2.0mm and the value of the distance A between the first groove wall 113 and the second groove wall 114 satisfies with 0.5mm<A<2mm. More specifically, the distance between the first groove wall 113 and the pre-pressed line 109 may be 0.1 mm, 0.2 mm, 0.3 mm, 0.4 mm, 0.5 mm, 0.6 mm, 0.7mm, 0.8mm, 0.9mm, 1.0 mm, 1.1mm, 1.2 mm, 1.3mm, 1.4mm, 1.5 mm, 1.6mm, 1.7mm, 1.8mm, 1.9mm, 2.0 mm; the distance between the first groove wall 113 and the second groove wall 114 may be 0.6 mm, 0.7mm, 0.8 mm, 0.9mm, 1.0 mm, 1.1mm, 1.2 mm, 1.3mm, 1.4mm, 1.5 mm, 1.6mm, 1.7mm, 1.8mm, 1.9mm; and values of the D and the A are selected according to actual conditions.

Referring to FIG. 2, FIG. 2 is an expanded state of the battery pin 100. Take a third direction in the FIG. 2 as an example, a fourth direction is appendicular to the third direction in a horizontal plane. The main body plate 103 includes a first portion 116 and a second portion 117, the first portion 116 is connected between the top cover connecting portion 101 and the second portion 117, and the top cover connecting portion 101 is bent and connected with the first portion 116. Specifically, the first portion 116 extends in the fourth direction, and the first portion 116 has a first end and a second end which are oppositely arranged in the fourth direction. The first end is connected to the top cover connecting portion 101, and the second end is connected to the second portion 117. The main body plate 103 is bent and connected with the second portion 117 through the connecting plate 104. The second portion 117 extends in the third direction, and the second portion 117 has a third end and a fourth end which are oppositely arranged in the fourth direction. The third end is connected to the first connecting portion. More specifically, in order to achieve material saving, a width of the first portion 116 is L3, a sum of widths of the second portion 117, the connecting plate 104 and the bending plate 105 is L4, a width of the first portion 116 is L5, and a width of the top cover connecting portion 101 is L6, which defines L3=L4, L5=L6. Thus, in the expanded state, the battery pin 100 has a "1" shape.

Specifically, the top cover connecting portion 101 and the tab connecting portion 102 are provided at an included angle. In some embodiments, the included angle between the top cover connecting portion 101 and the tab connecting portion 102 may be 90°, that is, the included angle between the top cover connecting portion 101 and the tab connecting portion 102 is 90° in an ideal state. The included angle between the top cover connecting portion 101 and the tab connecting portion 102 may be about 90° depending on process accuracy, for example, may be 89°, 88°, 87°, 91°, 92°, and 95°. The included angle between the top cover connecting portion 101 and the tab connecting portion 102 may be obtained by bending in one-go, and the included angle between the top cover connecting portion 101 and the tab connecting portion 102 may be provided as required, which is not limited in the present application.

Specifically, referring to FIG. 1, the top cover connecting portion 101 is provided with a communication hole 118 extending through the top cover connecting portion 101, and the communication hole 118 is configured to clamp with the terminal 301. It should be noted that a shape of the communication hole 118 is not limited, and may be a straight hole (that is, the communication hole 118 has a same diameter everywhere in an extension direction of the communication hole 118), a stepped hole, or a tapered hole, which depends on the actual situation.

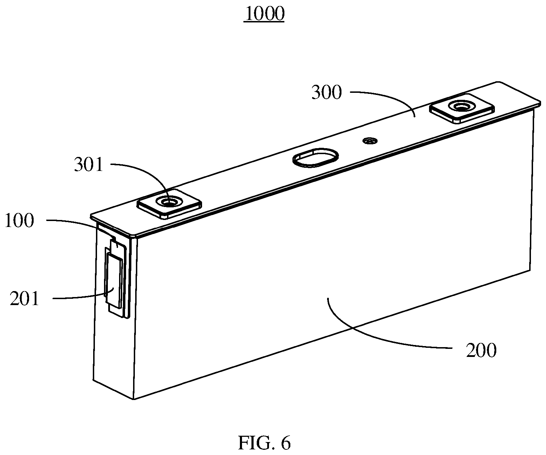

Referring to FIG. 6, a battery 1000 is provided in the present application, the battery 1000 includes a battery pin 100. Since the present battery 1000 employs all the technical solutions of all embodiments of the battery pin 100, and has at least all the beneficial effects from the technical solutions of the above embodiments, which will not be described here again.

## Claims

1. A battery pin, configured to connect a terminal (301) of a top cover (300) and a tab (201) of a core (200), and comprising:
a top cover connecting portion (101) configured to connect with the terminal (301); and
a tab connecting portion (102) comprising a main body plate (103), a connecting plate (104) and a bending plate (105), and the bending plate (105) being configured to connect with the tab; and
wherein the top cover connecting portion (101) is bent and connected to an end of the main body plate (103), the bending plate (105) is bendably connected to a side of the connecting plate (104), and the main body plate (103) is bent and connected to another side of the connecting plate (104).

2. The battery pin according to claim 1, wherein a thinning groove (108) is defined on the connecting plate (104), and the thinning groove (108) is disposed at a junction of the connecting plate (104) and the main body plate (103); or
a thinning groove (108) is defined on the connecting plate (104), and the thinning groove (108) is disposed at a junction of the connecting plate (104) and the bending plate (105).

3. The battery pin according to claim 2, wherein the connecting plate (104) comprises an outer side surface (106) close to the core (200) and an inner side surface (107) away from the core (200), and an opening of the thinning groove (108) is defined on the inner side surface (107).

4. The battery pin according to claim 2, wherein the connecting plate (104) comprises an outer side surface (106) close to the core (200) and an inner side surface (107) away from the core (200), a pre-pressed line (109) is further provided on the inner side surface (107) of the connecting plate (104), the tab connecting portion (102) is integrally provided, the pre-pressed line (109) is disposed at one of the junction of the connecting plate (104) and the main body plate (103) and the junction of the connecting plate (104) and the bending plate (105), and the thinning groove (108) is disposed at another of the junction of the connecting plate (104) and the main body plate (103) and the junction of the connecting plate (104) and the bending plate (105).

5. The battery pin according to claim 4, wherein the outer side surface (106) of the connecting plate (104) comprises a first arc segment (110), a linear segment (111), and a second arc segment (112) connected in sequence; the first arc segment (110) is disposed close to the bending plate (105); the second arc segment (112) is disposed close to the main body plate (103); and a radius of the first arc segment (110) is less than a radius of the second arc segment (112).

6. The battery pin according to claim 5, wherein an orthographic projection of the pre-pressed line on the connecting portion is in a boundary of the linear segment (111); and
a distance from the first arc segment (110) to an end of the bending plate (105) away from the main body plate (103) is L1, and a distance from the pre-pressed line (109) to the end of the bending plate (105) away from the main body plate (103) is L2, and wherein L1>L2.

7. The battery pin according to claim 6, wherein a bottom of the thinning groove (108) is provided in an arc, and a center of the second arc segment (112) is provided concentric with a center of the bottom of the thinning groove (108).

8. The battery pin according to claim 4, wherein the thinning groove (108) comprises a first groove wall (113) close to the bending plate (105) and a second groove wall (114) away from the bending plate (105), a distance between the first groove wall (113) and the second groove wall (114) is A, a thickness of the connecting plate (104) is C, a distance between the first groove wall (113) and the pre-pressed line (109) is D, and 0.5C<A<2C, 0<D≤2C.

9. The battery pin according to any one of claims 1 to 8, wherein the main body plate (103) comprises a first portion (116) and a second portion (117), the first portion (116) is connected between the top cover connecting portion (101) and the second portion (117), the top cover connecting portion (101) is bent and connected with the first portion (116), the bending plate (105) is bent and connected with the second portion (117) through the connecting plate (104), a width of the first portion (116) is L3, a sum of widths of the second portion (117), the connecting plate (104) and the bending plate (105) is L4, a width of the first portion (116) is L5, and a width of the top cover connecting portion (101) is L6, and wherein L3=L4, L5≤L6.

10. The battery pin according to any one of claims 1 to 8, wherein the top cover connecting portion (101) is integrated with the tab connecting portion (102).

11. The battery pin according to any one of claims 1 to 8, wherein a predetermined angle between the top cover connecting portion (101) and the tab connecting portion (102) ranges from 89° to 95°.

12. The battery pin according to claim 11, wherein the predetermined angle between the top cover connecting portion (101) and the tab connecting portion (102) is 90°.

13. The battery pin according to any one of claims 1 to 8, wherein a communication hole (118) is defined in the top cover connecting portion (101), the communication hole (118) extends through the top cover connecting portion (101), and the communication hole (118) is configured to clamp with the terminal (301).

14. The battery pin according to any one of claims 1 to 8, wherein the battery pin (100) comprises an aluminum pin or a copper pin.

15. A battery, comprising the battery pin (100) according to any one of claims 1-14.

16. The battery according to claim 15, further comprising the top cover (300) and the core (200), wherein the top cover connecting portion (101) is connected with the terminal (301) of the top cover (300), and the tab connecting portion (102) is connected with the tab (201) of the core (200).
